Europäisches Patentamt

European Patent Office

Office européen des brevets

(19)

(11) Publication number: **0 145 341**
A2

(12) # EUROPEAN PATENT APPLICATION

(21) Application number: 84307975.7

(22) Date of filing: 16.11.84

(51) Int. Cl.⁴: **C 01 F 7/02,** B 01 J 21/04, B 01 J 35/08

(30) Priority: 18.11.83 US 553101

(43) Date of publication of application: 19.06.85 Bulletin 85/25

(84) Designated Contracting States: CH DE FR GB LI NL

(71) Applicant: ALUMINUM COMPANY OF AMERICA, Alcoa Building, Pittsburgh Pennsylvania (US)

(72) Inventor: Pearson, Alan, 4117 Dundee Drive, Murryville State of Pennsylvania (US)

(74) Representative: Baillie, Iain Cameron et al, c/o Ladas & Parry Isartorplatz 5, D-8000 München 2 (DE)

(54) **Method for making alumina objects.**

(57) A method for making alumina objects, including preparing a mixture of water and rehydration bondable alumina particles, and dispersing the mixture in an immiscible liquid for bonding the particles in rounded shapes.

EP 0 145 341 A2

## METHOD FOR MAKING ALUMINA OBJECTS

Low density alumina balls are very useful as a catalyst or catalyst support material, for example, in the automotive catalyst application described in U.S. Patent No. 4,051,072. For this reason, extensive work has been done to find ways to make such a product, and numerous patents have been issued. In general, two basic methods have been used to obtain low density: "burn outs" and "oil drop".

In the "burn out" approach, either activated alumina, gelatinous alumina, or microcrystalline precipitated boehmite (pseudoboehmite) is mixed with a volatile material and shaped as by pelletizing or extrusion. After aging and drying, the material is heated, causing the volatile component to vaporize or burn out, leaving a porous, low density structure. U.S. Patent Nos. 3,856,708, 4,051,072, and 4,119,474 are examples of this approach. This method has several drawbacks, since clean burning, controlled-size additives are expensive, while the cheaper additives such as sawdust require high temperatures to burn out, tend to carbonize, and can leave undesirable ash residues. Also, these additives require precautions to prevent dust explosions during use, and in some cases to treat off-gases to prevent environmental pollution.

In the oil-drop method, soluble aluminum compounds, such as aluminum hydroxychloride, are dissolved in water and the solution dropped into an immiscible liquid where

U.S. 553,101 Pears

the solution is neutralized in some manner, causing the alumina to precipitate, which in turn transforms the drops into rigid spheres. Alternately, expensive microcrystalline boehmite (pseudoboehmite) is dispersed as a colloidal sol, and the sol is dropped into the immiscible fluid, causing the sol to gel either by thermal or chemical means. A number of variations of this approach are represented by U.S. Patent Nos. 2,620,314; 3,346,336; 3,919,403; 4,116,882; 4,216,122; 4,273,735; 4,279,779; 4,301,033; 4,315,839; and 4,318,896. This method has the disadvantages of expensive raw materials, as well as chemical by-products such as ammonia, chlorides, nitrates, etc., which must be handled and eventually disposed of in some way.

It is an object of the invention to provide a new method for making quality alumina shapes of low density, which method is made inexpensive compared to prior art methods through its utilization of activated alumina without any need for burn out materials.

This as well as other objects which will become apparent in the discussion that follows are achieved, according to the present invention, by providing a method for making alumina objects, including preparing a mixture of water and rehydration bondable alumina particles, and dispersing the mixture in an immiscible liquid for bonding the particles in rounded shapes.

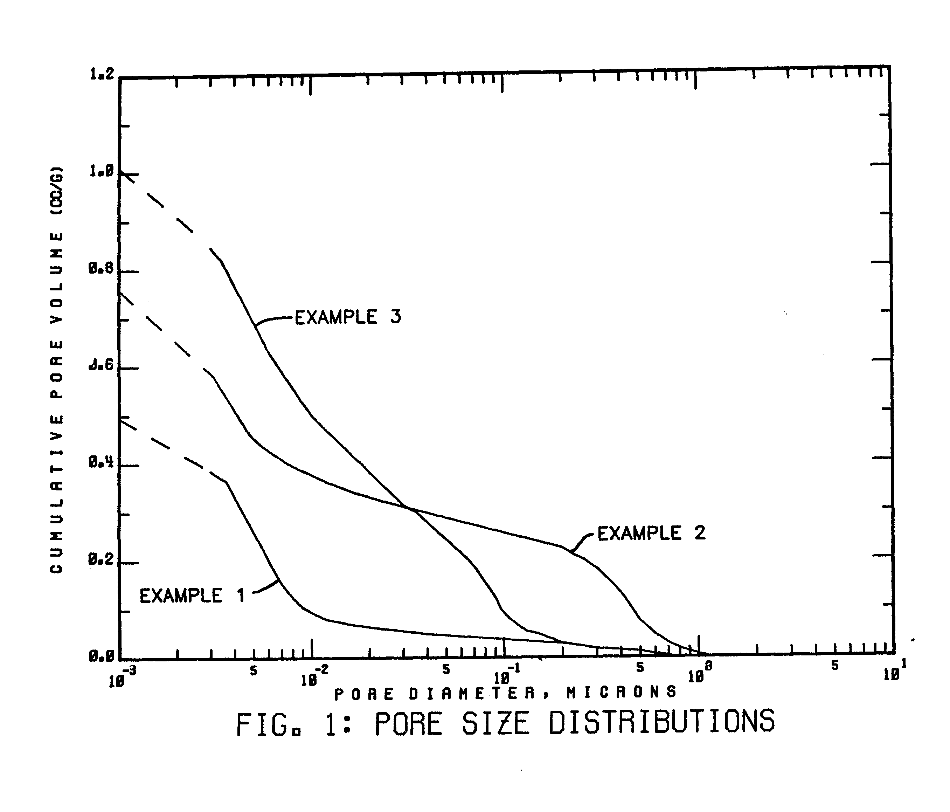

Figure 1 shows pore size distributions of the products of the examples; "cumulative" signifies that, for a given point on a size distribution curve, the ordinate is the total volume of pores having sizes greater than the corresponding abscissa.

## A.  Introduction

We have found that low density alumina spheres can be formed by simply mixing rehydratable alumina powder with water to form a fluid slurry and mixing with a hot, immiscible fluid in such a way that the slurry is dispersed into droplets which become spherical due to surface tension effects, and then solidify by rehydration bonding. This approach avoids the problems associated with burn outs and requires no additional chemical additives.  Once solidified, the spheres can be further aged to complete the rehydration reaction, then dried and activated or calcined to develop the desired final properties.

### B.    Rehydration Bondable Alumina Particles

In order to achieve initial activation, hydrated alumina, i.e. $Al(OH)_3$, is rapidly heated to create a porous, poorly crystallized, reactive alumina structure.  This step is, per se, well known in the art, and discussed in e.g. U.S. Patent Nos. 2,881,051; 2,915,365; and 3,222,129. This "partially calcined" or "activated" powder typically has a residual water content of about 4 to 12%, as measured by weight loss on heating from 250 to 1100°C.  A significant property of the powder for this invention is that it must partially rehydration bond rapidly enough to bond the individual powder particles of a droplet together in a reasonable time during the forming step.

Suitable activated powder is commercially available, examples being Alcoa Activated Alumina Powders CP-7 and CP-1 of Aluminum Company of America.  The CP Powders are rehydratable and form a hydroxyl bond upon contact with water.  The rehydration reaction is exothermic. Typical physical properties for these CP powders appear in Table I.  The median particle sizes are the "50% <" entries.

### Table I

### Alcoa Activated Alumina Powders

| | CP-7 | CP-1 |
|---|---|---|
| **Typical Physical Properties** | | |
| XRD Analysis, major | amorphous | amorphous |
| Size, 90% <, microns | 20.0 | 1.2 |
| 50% <, microns | 7.5 | 1.0 |
| 10% <, microns | 1.3 | 0.8 |
| LBD, lbs/ft$^3$ (approx.) | 34 | 18 |
| PBD, lbs/ft$^3$ (approx.) | 43 | 26 |
| SA, m$^2$/g | 325* | 375* |

*on rehydration/activation as in
 Example I below

**Typical Chemical Properties - wt%**

| | CP-7 | CP-1 |
|---|---|---|
| $Al_2O_3$ | 93.1 | 92.8 |
| $SiO_2$ | 0.02 | 0.06 |
| $Fe_2O_3$ | 0.02 | 0.03 |
| $Na_2O$ (Total) | 0.35 | 0.45 |
| $Na_2O$ Water Soluble (%) | 30 | 40 |
| LOI (250-1200°C) | 6.5 | 6.5 |

XRD = X-ray diffraction

LBD = Loose bulk density

PBD = Packed bulk density

 SA = Surface area

LOI = Loss on ignition

### C. Forming

The activated powder is mixed with water to yield a fluid slurry.

The amount of water used is dependent upon the powder characteristics and desired final properties of the spheres. For a given powder, as water to powder weight ratio decreases, the sphere density will increase and strength will increase. Also, time required for rehydration bonding decreases with decreasing water content. For this reason, if maximum strength is desired, the water content should be close to the minimum amount required to give a pourable consistency (i.e. fluid enough that the drops can contract to a spherical shape due to surface tension effects on contact with the immiscible fluid). If lower density is desired and some loss of strength can be tolerated in the final application, then water content can be increased within limits. In addition, each powder requires a characteristic minimum amount of water to reach a pourable consistency and this minimum amount tends to increase as powder particle size decreases. Also, as powder particle size decreases, the strength of the final product tends to be greater at a given density level. On the other hand, powders generally become more expensive as particle size decreases. Because of these factors, the choice of powder particle size and water content is a complex balance which depends upon desired product properties and cost. For the powders described in the examples, CP-7 requires about 63 to 90 mass-% water (dry powder basis) while CP-1 requires about 83 to 125 mass-% water.

The slurry is mechanically dispersed in a hot liquid which is essentially immiscible with water and which causes the dispersed slurry droplets to assume a more or less spherical shape. The dispersion can be accomplished either before or after the slurry is added to the immiscible fluid. Suitable methods of dispersion include dripping through an orifice plate, streaming, spraying, centrifugally dispersing by dropping onto a rotating plate, mechanically mixing, etc.

In general, the immiscible liquid may be any of those used in the patents listed above before the "A. Introduction" section with respect to the oil-drop method. Typical property ranges for suitable hydrocarbon or silicone oils are:

-6- 0145341

| Temp. [°C./°F.] | Viscosity [Centistokes] | Specific Gravity |
|---|---|---|
| 24/75 | 10-2000 | 0.8-0.9 |
| 40/104 | 3-400 | --- |
| 80/175 | 0.5-100 | --- |

For forming nominally 3 mm diameter spheres in a 2-meter column of oil, properties of a hydrocarbon oil suitable as the immiscible liquid are:

| Temp. [°C./°F.] | Viscosity [Centistokes] | Specific Gravity |
|---|---|---|
| 24/75 | 151 | 0.875 |
| 40/104 | 73 | 0.860 |
| 80/175 | 14.0 | 0.844 |

Oils of other viscosity can be chosen on the basis of Stokes' Law and desired settling time in the column being used. An upward flow of oil in a column may also be used to obtain further control of suspension time in the oil.

After the droplets have been formed into spherical shapes by surface tension effects in the immiscible liquid, the alumina partially rehydrates, forming microcrystalline boehmite which bonds the alumina particles together, converting the slurry droplets into rigid spheres. The rehydration reaction is accelerated by heat and the hot immiscible liquid is conveniently used as a heat source. For atmospheric pressure operation, the oil temperature should be less than about 95°C. to prevent boiling of the water within the droplets but greater than about 50°C. to promote rehydration hardening within a reasonable time. If a pressurized column is used, temperatures above 95°C. can be used as long as boiling of the water is prevented. Important functions of the forming step are to disperse the slurry into spherical droplets and to solidify the droplets to the extent that they retain their shape during subsequent operations.

### D. Aging

The rigid spheres from the forming step are further aged in contact with liquid water or water vapor to further the rehydration reaction and develop maximum strength. A typical aged product will contain about 20-60 mass-% boehmite and 0-30 mass-% bayerite. This process step has, per se, been extensively studied as evidenced by U.S. Patent Nos. 2,881,051; 3,222,129; 3,392,125; 3,480,389; 3,628,914; 3,928,236; 4,001,144; and 4,119,474. A wide variety of aging conditions can be applied to alter chemical purity and pore size distribution for specific applications, but the pellet density, which is established in the forming step, will be essentially unchanged.

### E. Final Activation/Calcination

In most cases, the aged material will be given a final heat treatment to decompose products of rehydration (bayerite and boehmite) and establish the desired surface area and phase composition. An example of this is shown in U.S. Patent No. 4,051,072. Amorphous material, material containing transitional alumina phases such as chi, rho, gamma, or delta, or even alpha phase material, can be obtained by appropriate heating, as is known. Regardless of the heat treatment employed, the low pellet density established in the forming step will be reflected in the finished product.

### F. Examples

The following examples illustrate the process.

### Example 1

This is a comparative example (Reference No. S-100) and uses the prior art method of ball forming (nodulizing) by tumbling in a rotating disc or drum. Hydrated alumina with a median particle diameter of 7 μm was rapidly activated to produce a product available as Alcoa Activated Alumina Powder CP-7 and then nodulized by adding it to a rotating drum while being sprayed with water for rehydration. After forming, the balls were aged by immersion in water for 4 hours at 60°C. The balls were then dried and given a final activation by heating to 400°C. to decompose rehydration products as described above. Pore size distribution in the final product was as presented in Figure 1, as determined using an AUTOPORE 9200 instrument manufactured by Micromeritics Instrument Corp. of Norcross, GA. Other properties of the final product are shown in Table II. It can be seen that this material has a packed bulk density (PBD) of .75 $g/cm^3$, which is typical for this type of process. Loose bulk density is about 70-80% of PBD. Particle density was 1.24 $g/cm^3$ and total porosity was 0.49 $cm^3/g$.

### Example 2

This example (Reference No. CC-463) shows the improvement using the process of the invention. The same activated powder as in Example 1 was mixed with water (64 g water per 100 g activated powder) to form a pourable slurry. This slurry at room temperature was added dropwise to a 2-meter column of the hydrocarbon oil mentioned above, heated to 80°C. and having at that temperature a viscosity of 14.0 centistokes and a specific gravity of 0.844. The 3 mm diameter drops reached the bottom of the column within about 20 seconds, by which time they had hardened sufficiently to retain their spherical shapes. After 2 hours, the pellets were removed from the oil and aged an additional 30 minutes in water at 80°C. The pellets were then dried and given a final activation as in Example 1 to give an amorphous final product. The data in Table II show that an over 50% increase in total pore volume was achieved compared to the process of Example 1. This corresponds to a 35% reduction of packed bulk density. Pore size distribution was determined as in Example 1 and is shown in Figure 1.

### Example 3

This example (Reference No. CC-464) shows how properties of material produced by the new method can be varied by changing the particle size of the starting powder. A powder composed of hydrated alumina (gibbsite) crystals having a median diameter of 1 μm was activated to produce a product available as Alcoa Activated Alumina Powder CP-1 and slurried with water. In this case, 85 g of water were required per 100 g of powder to make a fluid slurry because of the smaller particle size. The slurry was dripped into the oil column, aged, and finally activated as in Example 2 to give an amorphous final product. The data in Table II show that total pore volume was increased by 107% over that of Example 1, and packed bulk density was decreased by 45%. In addition, strength was significantly increased despite the reduction in density, which is contrary to normal expectations. Pore size distribution was determined as in Example 1 and is presented in Figure 1.

Table II

Example Data

| Example No. | 1 | 2 | 3 |
|---|---|---|---|
| Feed Powder Crystal Size (μm) | 7 | 7 | 1 |
| **Final Activated Ball Properties** | | | |
| Diameter (mm) | 6.3 | 3.3 | 3.2 |
| BET Surface Area ($m^2$/g) | 325 | 380 | 328 |
| Packed Bulk Density (g/$cm^3$) | 0.75 | 0.49 | 0.41 |
| Helium (true) Density (g/$cm^3$) | 3.15 | 3.19 | 3.16 |
| Mercury (particle) Density (g/$cm^3$) | 1.24 | 0.93 | 0.75 |
| Total Pore Volume° ($cm^3$/g) | 0.49 | 0.76 | 1.01 |
| Crushing Strength* (MPa) | 7 | 5.6 | 11.8 |

°Total Pore Volume equals inverse of Hg Density minus inverse of He Density.

*Strength was determined by crushing individual balls using a Chatillon Universal Testing Machine Model UTSE (John Chatillon & Sons Co.) and are based on the ball cross sectional area. Ten-ball averages are shown.

## G. Discussion of Examples

Figure 1 shows pore size distributions of the products of Examples 1 through 3. It is evident that the new process has significantly increased the pore volume, primarily in pores above 100 Å diameter. A comparison of the curves of Examples 2 and 3 shows how pore size distribution can be shifted simply by changing particle size of the starting powder.

## H.  Extensions

Although the Examples show use of activated gibbsite as the starting material, it should be understood that mixtures of activated gibbsite and other materials can be used as long as sufficient activated gibbsite is used to provide the rehydration bond.  For example, bauxite (which typically contains large proportions of naturally occurring gibbsite) can be activated and used in this process as a lower-cost raw material.  The use of bauxite in a prior art nodulizing process is disclosed in U.S. Patent No. 3,011,980.  Also, mixtures of unactivated and activated gibbsite can be used as in U.S. Patent No. 2,876,068.  Other variations that can be employed while still taking advantage of the improved low density forming process are addition  of inorganic additives to promote specific catalytic reactions and incorporation  of burn-out materials to further reduce density or provide additional macroporosity.

## C L A I M S

1.      A method for making alumina objects, comprising the steps of preparing a mixture of water and rehydration bondable alumina particles, the median particle size of the alumina particles being up to about 7 microns, and dispersing the mixture in a water-immiscible liquid for rehydration bonding the particles in rounded shapes.

2.      A method as claimed in claim 1, further comprising, following the step of dispersing, aging the shapes in liquid water or water vapor for furthering rehydration of the particles.

3.      A method as claimed in claim 1 or 2, further comprising, following the step of dispersing, heat treating the shapes for decomposing products of rehydration and adjusting surface area and phase composition.

4.      A method as claimed in any of claims 1 to 3, wherein the median particle size of the alumina particles fed to the step of preparing is 0.1 to 7 microns.

5.      A method as claimed in claim 4, wherein the median particle size is about one micron.

6.      A method as claimed in claim 4, wherein the median particle size is about seven microns and the water content of the mixture is in the range of about 63 to 90 mass-%, dry powder basis.

7.      A method as claimed in claim 4, wherein the median particle size is about one micron and the water content of the mixture is in the range of about 83 to 125 mass-%, dry powder basis.

FIG. 1: PORE SIZE DISTRIBUTIONS

0145341